# EUROPÄISCHE PATENTSCHRIFT

(11) **EP 1 010 976 B1**
(45) Veröffentlichungstag und Bekanntmachung des Hinweises auf die Patenterteilung: **14.05.2003**
(21) Anmeldenummer: 99124242.1
(22) Anmeldetag: 04.12.1999
(51) Int. Cl.: G01N 27/22

(54) **Anordnung zum kontaktlosen Messen der spezifischen Leitfähigkeit elektrolytischer Lösungen**
Non-contact measuring device of the specific conductivity of electrolytic solutions
Dispositif de mesure sans contact de la conductivité spécifique de solutions électrolytiques

(30) Priorität: 11.12.1998 DE 19857152
(43) Veröffentlichungstag der Anmeldung: 21.06.2000
(73) Patentinhaber: SITA Messtechnik GmbH, 01217 Dresden (DE)
(72) Erfinder: Dietrich, Matthias, 01277 Dresden (DE); Schulze, Lothar, Dr.-Ing, 01139 Dresden (DE)
(74) Vertreter: Ilberg, Roland W., Dipl.-Ing.

(56) Entgegenhaltungen:
- DE-A- 4 135 046
- DE-A- 19 537 059
- US-A- 5 151 660
- US-A- 5 164 319

## Beschreibung

Die vorliegende Erfindung bezieht sich auf eine Anordnung zum kontaktlosen Messen der spezifischen Leitfähigkeit elektrolytischer Lösungen mittels zweier, einen niederfrequenten Wechselstrom in eine Meßzelle einprägenden Koppelelektroden, deren Koppelkapazität hoch gegenüber der Kapazität der Meßlösung in der Meßzelle ist.

Anordnungen zum kontaktlosen Messen der Leitfähigkeit elektrolytischer Lösungen, die ein Maß für die Konzentration von Ionen in der Lösung ist, gibt es in vielfältigsten Ausführungen, jedoch verwehrt der Preis der bisher verwendeten Sensoren sowie der nachfolgenden Auswerteschaltungen den breiten Einsatz in der Hausgerätetechnik.

Für Messungen zum Zwecke der Bestimmung der elektrischen Leitfähigkeit von elektrolytischen Lösungen ist es bekannt, in der Lösung einen Stromfluß durch eine angelegte Spannung zu erzeugen. Der gemessene Strom ist proportional zur Leitfähigkeit der Lösung.

Im einfachsten Falle dienen hierzu zwei metallische Elektroden, über die eine Spannung angelegt und gleichzeitig der fließende Strom über dieselben Elektroden gemessen wird. Da jedoch in einer elektrolytischen Lösung ein Stromfluß mit der Wanderung von Ionen verbunden ist, bilden sich an den Elektroden Abscheidungen von Ionen eines Ladungstyps, die das ursprüngliche Feld schwächen und das Meßsignal verfälschen. Doch nicht nur Elektrolysevorgänge wirken sich störend aus, sondern auch die Anwesenheit von Metallen an sich, die zu unerwünschten chemischen Reaktionen führt, zu denen beispiels-weise die katalytische Wirkung von Platin zählt.

Zur Vermeidung der genannten Effekte wurden kontaktlose Meßverfahren entwickelt, bei denen der Meßstrom kapazitiv oder induktiv in den Elektrolyten eingekoppelt wird. So ist bereits eine Anordnung zur kapazitiven Leitfähigkeitsmessung bekannt, nach der metallische Elektroden auf die Außenseite einer nichtmetallischen Meßzelle aufgebracht werden. Infolge der nur sehr kleinen erreichbaren Koppelkapazitäten ist eine sehr hohe Frequenz notwendig, um einen meßbaren Stromfluß in der Meßzelle zu erzeugen. Die Auswertung erfolgt über die Blind- oder die Wirkkomponente, wobei bei beiden Methoden ein stark nichtlinearer Zusammenhang zwischen der Leitfähigkeit und dem Meßsignal, der durch die Kapazität der Meßzelle verursacht wird, besteht. Die Messung der Blindkomponente, d.h. der Gesamtkapazität der Meßzelle, ist die allgemein übliche Methode. Dabei wird die Dämpfung eines Hochfrequenzschwingkreises, die der Leitfähigkeit der wäßrigen Lösung proportional ist, ausgewertet. Beide Varianten weisen nur kleine Meßbereiche auf und werden in ihren Eigenschaften im wesentlichen von der Meßfrequenz charakterisiert, da die Elektrolytkapazität das Verhalten der Meßzelle wesentlich mitbeeinflußt.

Aus der DE 195 37 059 C2 ist eine vom Anmelder vorgeschlagene Anordnung bekannt geworden, bei der jede Koppelelektrode aus einem gebrannten Laminat einer Folie dielektrischer Kondensatorkeramik, einer Metallisierungsschicht und einer durchkon-taktierten Trägerkeramik besteht. Die sensorseitige Schicht der Keramikfolie ist poliert. Bei der Metallisierung einer Kondensatorkeramik ist jedoch die Schichtdicke des Dielektri-kums, die sich umgekehrt proportional auf die Koppelkapazität der Elektroden auswirkt, mit minimal 40 µm noch relativ groß. Die sehr hohe Dielektrizitätskonstante der X7R-Keramik (z.B. εᵣ =2000) kann dies bei vorgegebener, möglichst kleiner Elektrodenfläche nicht in erwünschtem Maße ausgleichen, weshalb die Linearität und damit der Meßbereich eines solchen Meßsystems, bei dem die Kapazität der Meßlösung in der Meßzelle immer noch relativ groß gegenüber der Koppelkapazität der Elektroden ist, Wünsche offen läßt. Die Messung erfolgt mit einer Frequenz im NF-Bereich, wobei der fließende elektrische Strom über den Spannungsabfall an einem Meßwiderstand ausgewertet wird. Die Koppelelektroden sind so gestaltet und angeordnet, daß sie beständig gegen die Meßflüssigkeit sind und Ablagerungen aufgrund der polierten Oberfläche weitestgehend vermieden werden, jedoch ist die Herstellung der Koppelelektroden recht aufwendig und damit kostenintensiv.

Aus der US 5 164 319 ist ferner ein Array bekannt, bei dem eine mit Pixeln ausgestattete Halbleiterelektrode einer Gegenelektrode gegenüberliegt. Die Pixel sind zu einer Messflüssigkeit hin mit einer sehr dünnen Isolierschicht von 20 nm bis 200 nm überzogen. Zwischen jedes Pixel und der gemeinsamen Gegenelektrode wird eine Gleichspannung angelegt. Je nach Qualität der Messflüssigkeit lagern sich auf der Isolierschicht an den Pixeln der Halbleiterelektrode chemisch gebundene oder mikrobiologische Substanzen ab, beispielsweise Enzyme, die über eine Veränderung des Gleichspannungswertes erfasst werden. Für eine Messung der elektrischen Leitfähigkeit einer Lösung ist diese Anordnung nicht geeignet.

Ausgehend vom Stande der Technik liegt der vorliegenden Erfindung die Aufgabe zugrunde, ein kapazitives Leitfähigkeitsmeßsystem für elektrolytische Flüssigkeiten zu schaffen, wobei Polarisationsvorgänge und elektrolytische Reaktionen in der Meßlösung vermieden werden, welches eine hohe Linearität in einem weiten Meßbereich besitzt und mit wesentlich verringerten Kosten herzustellen ist. Die Meßzelle soll infolge Ver-meidung von Ablagerungen an der sensorischen Oberfläche wartungsfrei sein und eine lange Lebensdauer versprechen, ohne daß die Meßwerte mit der Zeit driften.

Weiterhin soll die Anordnung eine analoge Auswertung der Meßergebnisse mit geringem Schaltungs-, Meß- und Rechenaufwand erlauben, um einen kostengünstigen Einsatz in Haushaltgeräten zu ermöglichen.

Die Aufgabe wird erfindungsgemäß durch die Merkmale des Anspruchs 1 gelöst. Weitere vorteilhafte Ausgestaltungen der Erfindung sind in den Ansprüchen 2 bis 8 offenbart.

Die erfindungsgemäß extrem geringe Schichtdicke des keramischen Dielektrikums bewirkt eine sehr hohe Koppelkapazität, die mindestens um eine Zehnerpotenz höher ist als gemäß einer Anordnung nach DE 195 37 059 C2, wodurch die Linearität des Meßsystems gegenüber dem Stand der Technik bei gleichzeitig geringen Gesamtkosten bedeutend verbessert wird.

Dabei wird die untere Grenze für die Schichtdicke des Dielektrikums lediglich von der Durchschlagspannung des verwendeten Werkstoffes bestimmt.

Durch die Verwendung von Hochleistungskeramiken als Dielektrikum weist die Meßzelle eine hervorragende chemische Beständigkeit gegenüber aggressiven Medien auf. Die hohe Härte der verwendeten Werkstoffe bewirkt außerdem eine ausgezeichnete Resistenz gegen abrassiv wirkende Teilchen, wie z.B. Sand, Schmutz, Staub.

Die Erfindung soll anhand eines Ausführungsbeispiels näher erläutert werden. In der zugehörigen Zeichnung zeigt:
- Fig. 1: den prinzipiellen Aufbau einer erfindungsgemäßen Koppelelektrode,
- Fig. 2: eine Meßzelle mit planparalleler Elektrodenanordnung,
- Fig. 3: eine Meßzelle mit planarer Elektrodenanordnung,
- Fig. 4: ein elektrisches Ersatzschaltbild der Meßzelle und
- Fig. 5: ein Blockschaltbild einer Meßschaltung.

Ein leitfähiges Trägersubstrat 1 von beispielsweise (10x10) mm² Fläche, z.B. auf Basis eines hochdotierten Silizium, ist einseitig poliert und auf dieser polierten Seite mit einer dielektrischen Schicht 2 einer Hochleistungs-Oxidkeramik, beispielsweise Tantalpentoxid, beschichtet. Alternative Beschichtungsmaterialien sind z.B. Siliziumdioxid oder auch Nichtoxidkeramiken, wie Siliziumnitrid, Siliziumoxynitrid, Siliziumkarbid, Bornitrid. Die Schichtdicke der dielektrischen Schicht ist äußerst gering, vorzugsweise unter 1 µm, um eine hohe Koppelkapazität zum Elektrolyten zu erreichen, als Beschichtungsverfahren kommt beispielsweise Sputtern oder ein CVD-Verfahren in Betracht. Auf der der Sensorseite gegenüberliegenden, leitenden Außenseite ist ein elektrischer Anschluß 3 kontaktiert.

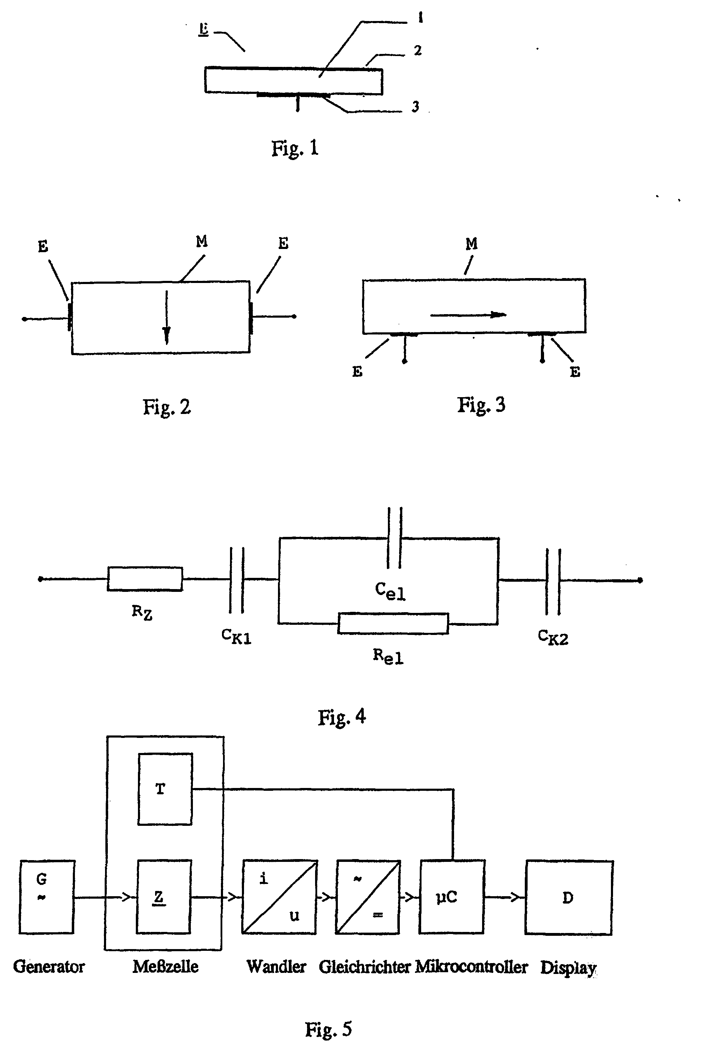

In Fig. 2 ist eine Meßzelle M dargestellt, die in Pfeilrichtung von einer zu messenden elektrolytischen Lösung, beispielsweise einer Waschlauge, durchströmt wird. Beiderseits der Meßzelle M sind die Koppelelektroden E im gegenseitigen Abstand von beispielsweise 10 mm angebracht.

Fig. 3 zeigt eine planare Anordnung der Koppelelektroden E an einer Meßzelle M, die wiederum in Pfeilrichtung von einer zu messenden Lösung durchströmt wird. Der Abstand der Meßelektroden E zueinander beträgt im Beispiel 30 mm.

In Fig. 4 ist das Ersatzschaltbild der Meßzelle dargestellt. Darin bezeichnet R_{Z} den Widerstand der Zuleitung, Cₑₗ die Kapazität der Meßlösung in der Meßzelle, Rₑₗ den Widerstand des Elektrolyten und C_{K1}, C_{K2} die Einkoppelkapazitäten der Koppelelektroden.

Fig. 5 zeigt ein Blockschaltbild einer Meßschaltung. Ein Frequenzgenerator liefert eine Wechselspannung uM bekannter Amplitude mit einer Frequenz von beispielsweise 100 kHz. Diese Spannung uM wird kapazitiv über die Koppelelektroden einer Meßzelle eingeprägt und treibt einen Wechselstrom durch den zu messenden Elektrolyt, welcher proportional zu dessen Leitfähigkeit ist. Anschließend wird der Meßstrom in eine proportionale Spannung umgewandelt und diese in einem Gleichrichter gleichgerichtet und einem Mikrokontroller zugeführt. Zusätzlich wird dem Mikrokontroller in bekannter Weise ein Signal von einem weiteren Meßfühler zugeführt, das Auskunft über die Temperatur der Lösung gibt. Dies ist notwendig, da bekanntlich die Leitfähigkeit elektrolytischer Lösungen stark temperaturabhängig ist. Im Mikrokontroller wird unter Berücksichtigung der Temperaturkompensation die Berechnung der Leitfähigkeit vorgenommen und das Ergebnis z.B. in einem Display dargestellt oder einer weiteren Meßwertverarbeitung zugeführt, z.B. einem Waschlaugendiagnose-System. Der Meßbereich der beschriebenen Anordnung umfaßt 0,1 mS/cm bis 100 mS/cm. Die Anordnung ist damit sehr gut geeignet, den Verschmutzungs-grad von Waschlaugen oder Spülwässern in Waschmaschienen des Haushalts oder der Industrie zu bestimmen.

## Patentansprüche

1. Anordnung zum kontaktlosen Messen der spezifischen Leitfähigkeit elektrolytischer Lösungen mittels zweier, einen niederfrequenten Wechselstrom in eine Messzelle einprägenden Koppelelektroden, deren Koppelkapazität hoch gegenüber der Kapazität der Messlösung in der Messzelle ist, wobei der durch die Messzelle fließende elektrische Strom ein Maß für die spezifische elektrische Leitfähigkeit der Messlösung ist, **dadurch gekennzeichnet, dass** jede Koppelelektrode (E) aus einem gut leitfähigen Substrat (1), besteht, auf dessen Sensorseite unmittelbar eine sehr dünne Schicht eines keramischen Dielektrikums (2) mit einer Schichtdicke kleiner 2 Mikrometer aufgebracht ist und dessen Außenseite mindestens einen elektrischen Anschluss (3) aufweist.

2. Anordnung nach Anspruch 1, **dadurch gekennzeichnet, dass** das keramische Dielektrikum (2) eine Schichtdicke zwischen 50 Nanometer und 1 Mikrometer aufweist.

3. Anordnung nach Anspruch 1, **dadurch gekennzeichnet, dass** das Substrat (1) aus hochdotiertem Silizium oder Metall besteht.

4. Anordnung nach Anspruch 1, **dadurch gekennzeichnet, dass** das keramische Dielektrikum (2) aus einer Hochleistungs-Oxidkeramik oder einer Nichtoxidkeramik besteht.

5. Anordnung nach Anspruch 4, **dadurch gekennzeichnet, dass** das keramische Dielektrikum (2) durch Sputtern oder ein CVD-Verfahren aufgebracht ist.

6. Anordnung nach Anspruch 1, **dadurch gekennzeichnet, dass** die Koppelelektroden (E) planparallel, planar oder schiefwinkelig zueinander angeordnet sind.

7. Anordnung nach Anspruch 1, **dadurch gekennzeichnet, dass** die Messzelle (M) von der Messlösung ständig durchströmt ist.

8. Anordnung nach Anspruch 1, **dadurch gekennzeichnet, dass** die Messzelle (M) als Tauchsensor ausgeführt ist.

## Claims

1. Arrangement for the contactless measuring of the specific conductivity of electrolytic solutions by means of two coupling electrodes impressing a low-frequency alternating current into a measuring cell, the coupling capacity of the coupling electrodes being high relative to the capacity of the measuring solution in the measuring cell, the electric current flowing through the measuring cell being a measure of the specific electric conductivity of the measuring solution, **characterised in that** each coupling electrode (E) consists of a substrate (1) with good conductivity, on the sensor side of which a very thin layer of a ceramic dielectric (2) with a layer thickness of less than 2 micrometers is directly applied and the exterior of which comprises at least one electric terminal (3).

2. Arrangement according to claim 1, **characterised in that** the ceramic dielectric (2) has a layer thickness between 50 nanometers and 1 micrometer.

3. Arrangement according to claim 1, **characterised in that** the substrate (1) consists of highly doped silicon or metal.

4. Arrangement according to claim 1, **characterised in that** the ceramic dielectric (2) consists of a high-capacity oxide ceramic or a non-oxide ceramic.

5. Arrangement according to claim 4, **characterised in that** the ceramic dielectric (2) is applied by sputtering or a CVD method.

6. Arrangement according to claim 1, **characterised in that** the coupling electrodes (E) are arranged in a plane-parallel, planar or oblique-angled manner with respect to one another.

7. Arrangement according to claim 1, **characterised in that** the measuring solution constantly flows through the measuring cell (M).

8. Arrangement according to claim 1, **characterised in that** the measuring cell (M) is designed as an immersion sensor.

## Revendications

1. Dispositif de mesure sans contact de la conductivité spécifique de solutions électrolytiques à l'aide de deux électrodes de couplage qui appliquent un courant alternatif à basse fréquence dans une cellule de mesure et dont la capacité de couplage est élevée par rapport à la capacité de la solution de mesure dans la cellule de mesure, le courant électrique qui circule dans la cellule de mesure étant une mesure pour la conductivité électrique spécifique de la solution de mesure,
**caractérisé en ce que**
chaque électrode de couplage (E) se compose d'un substrat (1) bon conducteur sur le côté capteur duquel est immédiatement appliquée une couche très mince d'un diélectrique (2) céramique d'une épaisseur de couche inférieure à 2 micromètres et dont le côté extérieur présente au moins un raccord (3) électrique.

2. Dispositif selon la revendication 1,
**caractérisé en ce que**
le diélectrique (2) céramique présente une épaisseur de couche comprise entre 50 nanomètres et 1 micromètre.

3. Dispositif selon la revendication 1,
**caractérisé en ce que**
le substrat (1) est en silicium ou en métal fortement dopé.

4. Dispositif selon la revendication 1,
**caractérisé en ce que**
le diélectrique (2) céramique est en une céramique oxydée à performances élevées ou en une céramique non oxydée.

5. Dispositif selon la revendication 4,
**caractérisé en ce que**
le diélectrique (2) céramique est appliqué par pulvérisation cathodique ou par un procédé de dépôt chimique en phase vapeur.

6. Dispositif selon la revendication 1,
**caractérisé en ce que**
les électrodes de couplage (E) sont placées les unes par rapport aux autres de façon parallèle plane, planaire ou en angle oblique.

7. Dispositif selon la revendication 1,
**caractérisé en ce que**
la cellule de mesure (M) est constamment traversée la solution de mesure.

8. Dispositif selon la revendication 1,
**caractérisé en ce que**
la cellule de mesure (M) est réalisée comme capteur plongeur.
